(19) Europäisches Patentamt
European Patent Office
Office européen des brevets

(11) **EP 1 238 468 B1**

(12) **EUROPÄISCHE PATENTSCHRIFT**

(45) Veröffentlichungstag und Bekanntmachung des Hinweises auf die Patenterteilung:
**22.10.2003 Patentblatt 2003/43**

(21) Anmeldenummer: **01960618.5**

(22) Anmeldetag: **03.08.2001**

(51) Int Cl.⁷: $H04B\ 1/24$, $H04B\ 10/06$

(86) Internationale Anmeldenummer:
**PCT/EP01/09002**

(87) Internationale Veröffentlichungsnummer:
**WO 02/013403 (14.02.2002 Gazette 2002/07)**

(54) **VERFAHREN UND ANORDNUNG ZUR STÖRUNTERDRÜCKUNG IN EINER EMPFÄNGERSCHALTUNG**

METHOD AND ARRANGEMENT FOR NOISE REJECTION IN A RECEIVER CIRCUIT

PROCEDE ET SYSTEME POUR L'ANTIPARASITAGE DANS UN CIRCUIT RECEPTEUR

(84) Benannte Vertragsstaaten:
**FR GB IT**

(30) Priorität: **08.08.2000 DE 10038616**

(43) Veröffentlichungstag der Anmeldung:
**11.09.2002 Patentblatt 2002/37**

(73) Patentinhaber:
• **Vishay Semiconductor GmbH**
**74072 Heilbronn (DE)**
• **Melexis GmbH**
**99097 Erfurt (DE)**
• **ATMEL Germany GmbH**
**74072 Heilbronn (DE)**

(72) Erfinder:
• **EICHIN, Matthias**
**74080 Heilbronn (DE)**

• **KURZ, Alexander**
**74523 Schwäbisch Hall (DE)**
• **STAHL, Karl-Ulrich**
**99084 Erfurt (DE)**

(74) Vertreter: **Kolb, Georg**
**DaimlerChrysler AG,**
**Intellectual Property Management**
**IPM, C106**
**70546 Stuttgart (DE)**

(56) Entgegenhaltungen:
**DE-A- 4 232 377        US-A- 4 553 049**

• **"TPS831" TOSHIBA DATA SHEET, 10. Dezember 1997 (1997-12-10), XP002184335 in der Anmeldung erwähnt**

**Beschreibung**

Die Erfindung betrifft ein Verfahren zur Störunterdrückung mittels eines güteeinstellbaren Bandpassfilters in einer Empfängerschaltung für trägermodulierte Empfangssignale gemäß dem Oberbegriff des Patentanspruchs 1 sowie eine Schaltungsanordnung zur Durchführung dieses Verfahrens.

Bekannte integrierte Schaltkreise (IC) für solche Empfängerschaltungen, insbesondere Fernsteuerungsempfänger, wie beispielsweise der U2548 von TEMIC Semiconductor GmbH, sind aufgrund ihrer Technologie größer dimensioniert und weisen dadurch eine geringe Störverkopplung auf. Ihre Größe beträgt ca. 1,8 mm$^2$. Auf der Nutzfläche weisen diese Schaltkreise Anschlussvorrichtungen für das Eingangssignal, das Ausgangssignal, die Versorgungsspannung, die Massezuleitung und mehrere Abgleichvorrichtungen auf. Die Funktionsweise eines solchen Schaltkreises besteht darin, dass das von einem Photodetektor, in der Regel eine Photodiode, empfangene Signal - das Empfangssignal - in eine Eingangsschaltung eingespeist wird. Die Eingangsschaltung weist einen Transimpedanzverstärker auf, der pulsierende Eingangsstromsignale verstärkt und in Spannungssignale umwandelt. Diese Spannungssignale werden dann in einer Signalaufbereitung bearbeitet. Die Signalaufbereitung weist einen Regelverstärker, einen Limitter und einen Bandpassfilter auf. Hierbei ist die Aufgabe des Regelverstärkers, die Ausgangsspannung vom Transimpedanzverstärker gemäß der Regelvorgabe zu verstärken. Der Limitter hat die Aufgabe den Signalhub zu begrenzen, um eine Übersteuerung des Bandpassfilters zu vermeiden. Der Bandpassfilter ermöglicht die Selektivität des Empfängers und begrenzt dessen Bandbreite. Die Signale am Ausgang des Bandpassfilters werden in einem Demodulator als Auswerteschaltung ausgewertet. Dieser Demodulator besteht aus Komparatoren, einem Integrator und Schmitt-Trigger und erzeugt ein Schaltsignal für einen als Schalter wirkenden Treibertransistor, wodurch ein digitales Steuersignal, beispielsweise einem Mikrocontroller zur Weiterverarbeitung bereitgestellt wird.

Dieser bekannte Schaltkreis enthält ferner eine Verstärkungsregelung, durch die die Verstärkung des Empfängers einem Störfeld entsprechend eingeregelt wird, wodurch eine hohe Empfindlichkeit für die Empfangssignale erreicht wird, jedoch gleichzeitig Störeinflüsse, die beispielsweise von Fremdlicht herrühren, weitgehend unterdrückt werden, so daß hierdurch möglichst keine Ausgangsimpulse durch den Treibertransistor erzeugt werden.

Dieser bekannte Schaltkreis weist jedoch den Nachteil auf, dass bei Anwendung neuer Technologien dessen Schaltkreisfläche reduziert wird, wodurch aufgrund von Schaltvorgängen im Ausgangsbereich des Empfängers, insbesondere durch den Treibertransistor Störungen, beispielsweise in Form von Oszillatorschwingungen aufgrund der nun wirksamen kapazitiven Kopplungen und Massepotentialabfall innerhalb des Schaltkreises verursacht werden, die von der Verstärkungsregelung nicht beseitigbar sind.

Zur Lösung solcher Probleme ist es aus einem Toshiba-Datenblatt des monolithisch integrierten Photo-Schaltkreises TPS831 bekannt, einen externen Kondensator der Größe 1000pF zwischen Ausgangsanschluß $V_0$ und Masseanschluß GND anzuschließen, um - wie es dort heißt - Oszillationen zu verhindern. Der offensichtliche Nachteil dieser Lösung besteht darin, daß durch das zusätzliche Bauteil neben den Chipkosten weitere Kosten verursacht werden und der demodulierte Ausgangspuls durch diesen Kondensator verfälscht wird.

Aufgabe der Erfindung ist es daher, ein Verfahren der eingangs genannten Art aufzuzeigen, bei dem die genannten eigenverursachten Störungen unterdrückt werden können ohne die aus dem Stand der Technik beschriebenen Nachteile aufzuweisen.

Diese Aufgabe wird durch die Merkmale des Patentanspruchs 1 gelöst. Hiernach erfolgt eine aktive Störunterdrückung eigenverursachter Störungen aufgrund von Schaltvorgängen am Ausgang der Empfängerschaltung durch eine zeitlich begrenzte Herabsetzung der Güte des Bandpassfilters im Moment des Auftretens der Störung, also während des Schaltens und im Anschluß an den Schaltvorgang. Vorzugsweise wird die Zeitdauer der Güteredzierung wenigstens auf die Dauer der durch den Schaltvorgang ausgelösten Störung begrenzt, also solange, bis die Störung abgeklungen ist.

Gemäß einer vorteilhaften Weiterbildung der Erfindung wird in Abhängigkeit des Ausgangssignals des Demodulators, das als erster Rechteckimpuls der Hüllkurve des trägermodulierten Empfangssignals entspricht und als Schaltsignal einem Treibertransistor als Ausgangstransistor des Empfängers zugeführt wird, ein Steuersignal tqr zur Güteredzierung des Bandpassfilters abgeleitet, indem in Abhängigkeit der Flanken des ersten Rechteckimpulses ein phasenverschobener weiterer Rechteckimpuls erzeugt wird, der vorzugsweise sich zeitlich an den ersten Rechteckimpuls anschließt. Da mit der ersten Flanke des erstgenannten Rechteckimpulses ein Schaltvorgang, bspw. das Einschalten eines oben genannten Schalters eingeleitet wird und mit dessen zweiter Flanke der Schaltvorgang, bspw. mit dem Ausschalten dieses Schalters beendet wird, erzielt man in einfacher Weise die Korrelation der Störung mit der Güteredzierung.

Des weiteren wird der von dem Demodulator erzeugte Rechteckimpuls aus dem bandpassgefilterten Empfangssignal abgeleitet, indem zunächst aus diesem Empfangssignal durch Quantisierung Pulsfolgen erzeugt werden, die anschließend zu einem Integralwert aufintegriert werden, wobei bei Ausbleiben von Pulsfolgen eine Rückführung dieses Integralwertes erfolgt.

Bei einem weiteren vorteilhaften Ausführungsbeispiel ist eine automatische Verstärkungsregelung des Empfangssignales mittels eines Regelverstärkers vorgesehen, dem das Empfangssignal vor der Bandpassfilterung zugeführt wird. Die Regelung erfolgt in Abhängigkeit der Signalgröße des Empfangssignales und den Umgebungbedingungen - also insbesondere dem Störumfeld - der Empfängerschaltung. Um auch eine durch diese Regelung möglicherweise verursachte Störung zu verhindern, wird diese Verstärkungsregelung während der Demodulation eines bandpassgefilterten Empfangssignales - also während dem Empfang eines gültigen Datenbits - inaktiv geschaltet. Vorzugsweise wird zur Inaktivschaltung der automatischen Verstärkungsregelung ein gegenüber dem ersten Rechtekkimpuls (Ausgangssignal des Demodulators) phasenverschobener dritter Rechteckimpuls erzeugt, dessen Pulsbreite länger ist als diejenige des ersten Rechteckimpulses.

Schließlich wird vorzugsweise in Abhängigkeit der Integralwerte sowohl während der Aufintegration als auch während der Rückführung das Ausgangssignal des Demodulators (erster Rechteckimpuls), das Steuersignal zur Gütereduzierung des Bandpassfilters (zweiter Rechteckimpuls) und das Steuersignal (dritter Rechteckimpuls) zur Inaktivschaltung der automatischen Verstärkungsregelung abgeleitet.

Eine vorteilhafte Schaltungsanordnung zur Durchführung des erfindungsgemäßen Verfahrens ergibt sich gemäß den kennzeichnenden Merkmalen der Ansprüche 12 bis 15.

Eine solche Empfängerschaltung zur Durchführung des erfindungsgemäßen Verfahrens wird als monolithischer Schaltkreis hergestellt, der lediglich eine Photodiode benötigt, um als Empfänger für Infrarot-Fernbedienungen arbeiten zu können und kann bereits sehr kleine Ströme im Bereich einiger hundert Pikoampere demodulieren, wobei dies jedoch eine hohe Transimpedanz in der Größenordnung von 300 MΩ erfordert. Der Treibertransistor am Ausgang des Demodulators schaltet dagegen den vollen Logikpegelhub (z. B. 5V) bei einem Maximalstrom von bis zu einigen mA's. Bei einer Realisierung dieses Schaltkreises mit neuen zu kleineren Abmessungen des Chips führenden Technologien ergeben sich beispielsweise bei einer Chipfläche von 1 mm$^2$ die beschriebenen eigenverursachten Störungen (Oszillationen) aufgrund der nunmehr kleineren Abstände und der durch den hohen Spannungshub des Treibertransistors bewirkten Verkopplungen zum Eingang der Empfängerschaltung. Unabhängig von der Chipgröße neigt ein solcher Schaltkreis auch aufgrund des durch den Treiberstrom hervorgerufenen Massepotentialabfall zu Oszillationen. Mit dem erfindungsgemäßen Verfahren werden alle beschriebenen Störungen unterdrückt und zwar unabhängig von den Dimensionen des Chips, so daß auch bei zukünftigen Technologien, die zu weiteren Verkleinerungen führen, die Erfindung weiterhin vorteilhaft eingesetzt werden kann.

Das erfindungsgemäße Verfahren soll nachfolgend anhand eines Ausführungsbeispiels im Zusammenhang mit den Zeichnungen erläutert werden. Es zeigen:

Figur 1:     ein Blockschaltbild einer Empfängerschaltung gemäß der Erfindung,

Figur 2:     ein Blockschaltbild eines in der Empfängerschaltung gemäß Figur 1 verwendeten Demodulators,

Figur 3:     ein Logikdiagramm zur Erläuterung der Funktionsweise des Demodulators gemäß Figur 2,

Figur 4:     ein Blockschaltbild eines in der Empfängerschaltung gemäß Figur 1 verwendeten Integrators,

Figur 5:     ein Logikdiagramm zur Erläuterung der Funktionsweise des Integrators gemäß Figur 4, und

Figur 6:     ein Prinzipschaltbild eines in der Empfängerschaltung gemäß Figur 1 verwendeten gyratorischen Bandpassfilters.

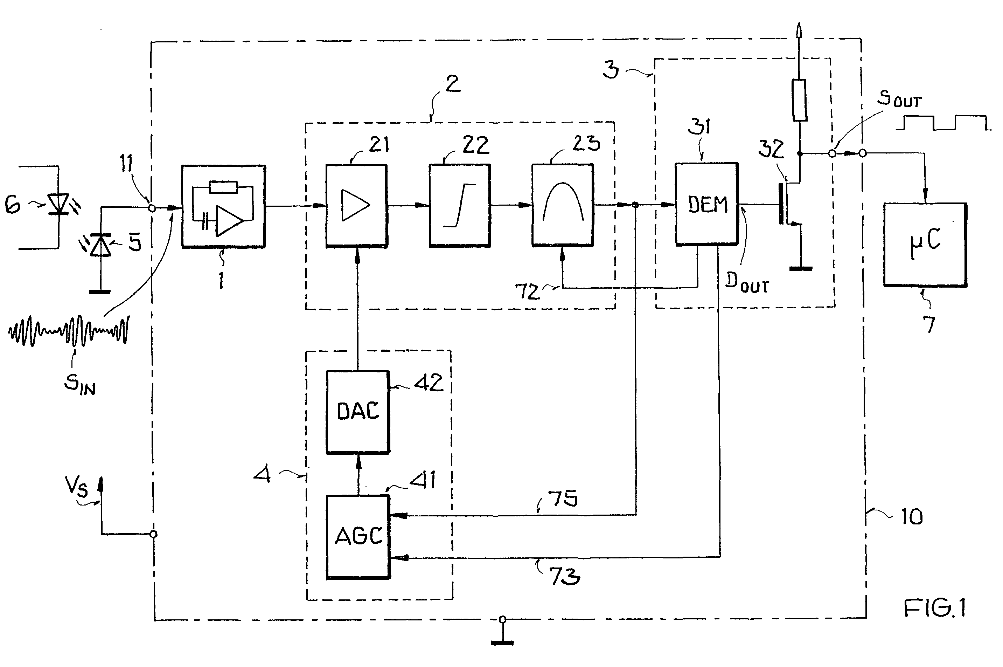

Figur 1 zeigt ein Blockdiagramm einer Empfängerschaltung 10 und seiner Umgebung. Die von einer optischen Sendediode 6 ausgestrahlten trägermodulierten Daten werden als Infrarot-Impulspakete von einer Photodiode 5 empfangen. Diese auf die Photodiode 5 auftreffenden Infrarot-Impulspakete mit einer Trägerfrequenz von bspw. 38kHz werden in elektrische Strom-Signale $S_{IN}$ umgewandelt. Sie liegen am Eingangsanschluß 11 der Empfängerschaltung 10 an. Diese elektrischen Strom-Signale $S_{IN}$ werden einer als Transimpedanzverstärker arbeitenden Eingangsschaltung 1 zugeführt, welche die Stromsignale $S_{IN}$ verstärkt und in Spannungssignale umwandelt. Hierbei muss die umgewandelte Spannung groß genug sein, um den Rauschanteil in nachfolgenden Signalaufbereitungsstufen vernachlässigbar zu machen. In dem nachfolgenden Signalaufbereitungsteil 2 werden diese Spannungssignale nochmals mittels eines Regelverstärkers 21 verstärkt, von einem Limiter 22 begrenzt und anschließend in einem Bandpassfilter 23 gefiltert, wobei dieses Bandpassfilter 23 neben seinem analogen Eingang noch einen Steuereingang besitzt, mit dem die Güte des Bandpassfilters zwischen zwei Werten umschaltbar ist.

Die Signalbegrenzung mittels des Limiters 22 ist deshalb erforderlich, um eine Übersteuerung des nachfolgenden Bandpassfilters 23 zu vermeiden und um impulsförmige Störungen, die z. B. über einen Versorgungsanschluss $V_s$ in den Empfänger gelangen, zu unterdrücken. In einem an den Signalaufbereitungsanteil 2 sich anschließenden Auswerteteil 3 wird das bandpassgefilterte Signal $B_{out}$ mittels eines Demodulators 31 demoduliert und über einen Treibertransistor 32 mit zugehörigen Lastwiderstand 32 als Ausgangssignal $S_{OUT}$ einem Mikrokontroller 7 zur weiteren Verarbeitung zur Verfügung gestellt. Der Demodulator 31 erzeugt auch ein Steuersignal tqr, das über eine Leitung 72 dem Steuereingang des Bandpassfilters 23 zugeführt wird. Hiermit wird die Güte des Bandpassfilters 23 im Anschluß an einen Schaltvorgang des Treibertransistors 32 kurzzeitig reduziert, um die Auslösung einer Oszillatorschwingung aufgrund des mit dem Treibertransistor 32 durchgeführten Schaltvorganges zu verhindern, um also einer Störverkopplung in der als integrierten Schaltkreis ausgeführten Empfängerschaltung entgegenzuwirken. So hat der Bandpassfilter 23, der auf einer Trägerfrequenz der Nutzsignale arbeitet und die Selektivität der Schaltung ermöglicht, eine Güte von beispielsweise 10, die aufgrund des Steuersignales tqr auf 1, wie weiter unten erläutert wird, reduziert werden kann.

Um die Verstärkung des von der Sendediode 6 ausgestrahlten Nutzsignals und damit die Empfindlichkeit des Empfängers zu optimieren, weist die Empfängerschaltung 10 eine Regelschaltung 4 auf, die Regelsignale dem Regelverstärker 21 zuführt und die ihrerseits das Ausgangssignal $B_{out}$ des Bandpassfilters 23 über eine Leitung 75 sowie ein vom Demodulator erzeugtes Signal $D_{stop-agc}$ über ein Leitung 74 als Eingangssignale erhält. Die Aufgabe dieser Regelschaltung 4 ist es, das Signal/Rauschverhältnis zu optimieren, indem die Verstärkung des Eingangssignal $S_{IN}$ in Abhängigkeit von der Größe des Eingangssignals verändert wird. Die Regelschaltung 4 ist aus einem Regellogikteil (AGC) 41 und einem Digital-Analog-Umsetzer (DAC) 42 aufgebaut. Der Regellogikteil 41 trennt das Nutz- von den Störsignalen und stellt die Verstärkung für die Nutzsignale auf ein möglichst hohes Niveau, womit eine hohe Empfindlichkeit für die Nutzsignale erreicht wird. Gleichzeitig werden Störeinflüsse von z.B. Fremdlicht reduziert. Der Digital-Analog-Umsetzer 42 wandelt die von dem Regellogikteil 41 erzeugte digitale Verstärkerinformation in eine analoge Steuerspannung für den Regelverstärker 21 um.

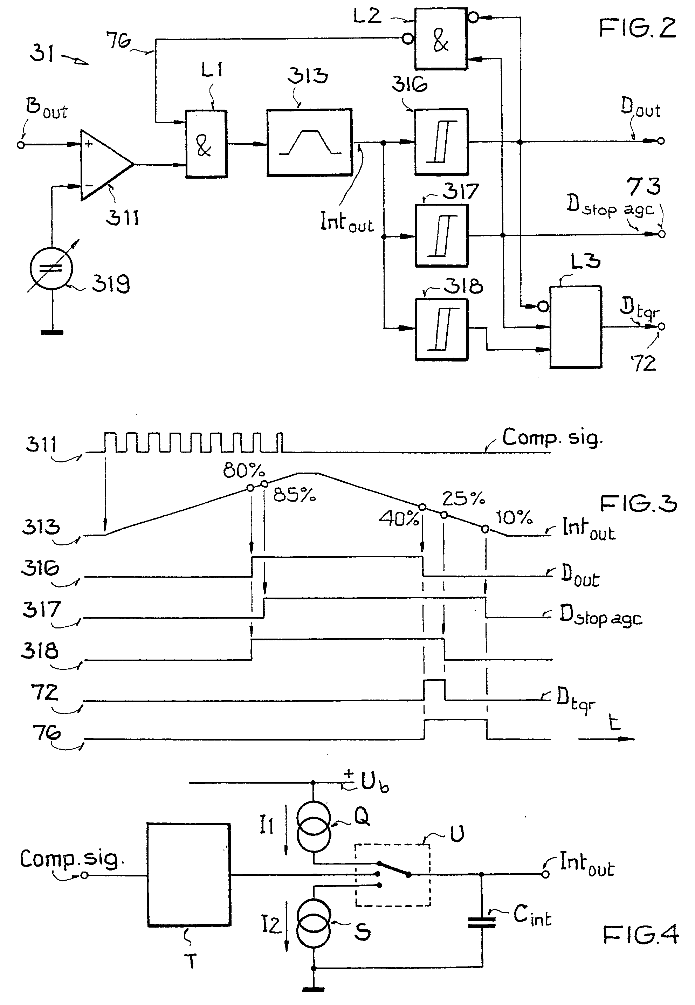

Im folgenden wird die Funktionsweise des Demodulators 31 anhand der Figur 2 und des zugehörigen Impulsdiagramms gemäß Figur 3 näher erläutert, insbesondere soll die Korrelation zwischen dem den Treibertransistor 32 schaltenden Ausgangssignal $D_{out}$ des Demodulators 31 und dem die Güte des Bandpassfilters 23 herabsetzenden Steuersignals $D_{tqr}$ dargestellt werden.

Gemäß Figur 2 wird das vom Bandpassfilter 23 kommende Ausgangssignal $B_{OUT}$ mit einem Komparator 311 digitalisiert, wobei dessen Schwellspannung 319 ein fest eingestellter Referenzwert darstellt, der jedoch gegenüber dem Bandfilterruhepegel auch signalabhängig über mehrere Stufen eingestellt werden kann. Die als Pulsfolgen $Comp_{sig}$ (siehe Impulsdiagramm 311 in Figur 3) digitalen Signale des Komparators 311 werden in einer analogen Integratorschaltung 313 integriert. Dieser Integrator 313 kennt die Zustände LADEN bzw. ENTLADEN bis zu den Aussteuerungsgrenzen 0% bzw. 100%, wodurch ein limitierter integraler Spannungsverlauf (siehe Impulsdiagramm 313 in Figur 3) als

Ausgangssignal $Int_{out}$ erzeugt wird. Am Ausgang des Integrators 313 sind drei Schmitt-Trigger 316, 317, 318 mit unterschiedlichen Hysteresen nachgeschaltet. Im Anwendungsbeispiel liegen die Ein- und Aus-Schaltvorgänge für den Schmitt-Trigger 316 bei 80% und 40% (siehe Impulsdiagramm 316 in Figur 3), beim Schmitt-Trigger 317 bei 85% und 10% (siehe Impulsdiagramm 317 in Figur 3) und beim Schmitt-Trigger 318 bei 50% und 25% (siehe Impulsdiagramm 318 in Figur 3). Aus der zeitlichen Überlappung der drei Schmitt-Trigger-Ausgangssignale $D_{out}$, $D_{stop-agc}$ und 318 werden mithilfe von den logischen Verbindungen L2 und L3 die Steuersignale $D_{tqr}$ (72), $D_{stop-agc}$ (73) und 76 gewonnen.

Aus dem Impulsdiagramm der Figur 3 ist ersichtlich, daß bei einem ansteigenden Integratorwert von 80% des Maximalwertes (100%) die positive Flanke des rechteckförmigen Demodulatorausgangssignals $D_{out}$ und die negative Flanke bei einem rückgeführten Wert des Integratorwertes von 40% erzeugt wird. In entsprechender Weise wird mit den oben angegebenen Werten das Rechtecksignal $D_{stop-agc}$ (317) erzeugt, das dem Regellogikteil 41 zugeführt wird, um während und kurze Zeit nach der Übertragung eines gültigen Datenbits die Regelung des Regelteils 4 inaktiv zu halten. Damit soll auch ein Einfluß der Störung durch den Treibertransistor auf die Regelschaltung 4 vermieden werden. Das Rechtecksignal 318, das Signal $D_{stop-agc}$ (317) und das invertierte Signal $D_{out}$ werden zur Erzeugung des Steuersignals $D_{tqr}$ (72) mit einem NAND-Gatter L3 verundet. Damit wird die positive Flanke des Rechtecksignals 72 erzeugt, wenn das $D_{out}$ - Signal seinen Low-Pegel annimmt, während dessen negative Flanke mit derjenigen des Rechtecksignals 318 zeitlich zusammenfällt.

Mit dem invertierten $D_{out}$ - Signal 316 und dem $D_{stop-agc}$-Signal 317 wird mittels eines NAND-Gatters L2 ein weiteres Rechtecksignal 76 erzeugt, das zusammen mit den von dem Komparator 311 erzeugten $Comp_{sig}$-Pülsfolgen 311 einem AND-Gatter L1 zugeführt wird. Die Impulsdauer dieses Rechteckimpulses 76 entspricht der Zeitdauer vom Pulsende des $D_{out}$ - Signales 316 bis zum Pulsende des $D_{stop-agc}$-Signals 317. Damit wird ein Nachtriggern des Komparators 311 während des Inaktivschaltens der Regelschaltung 4 verhindert.

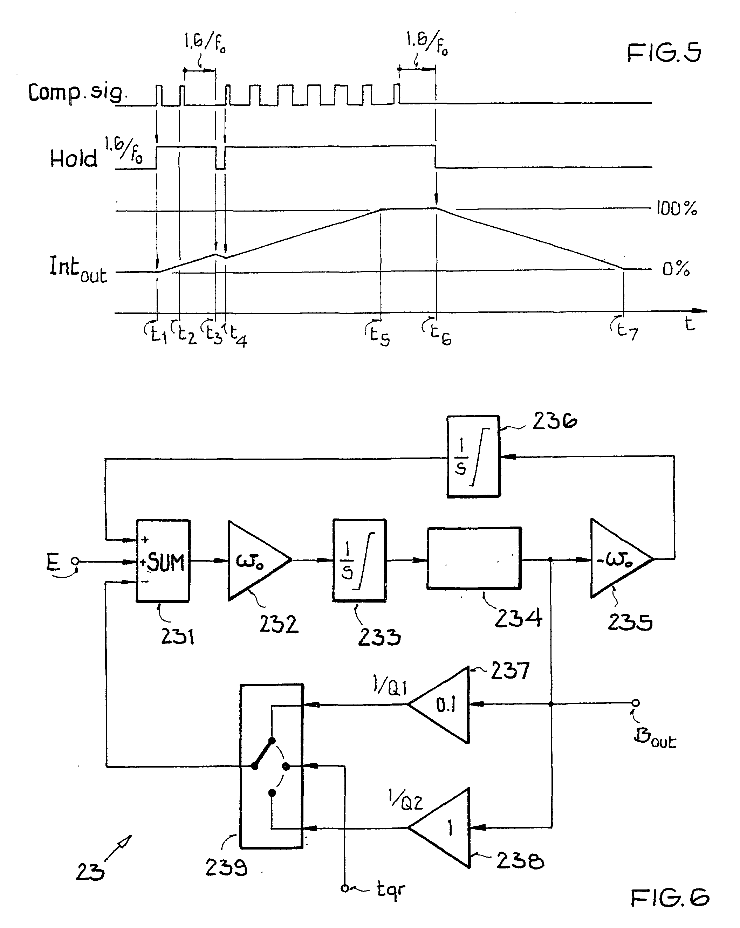

Der in dem Demodulator 31 verwendete analoge Integrator 313 integriert die digitalisierten Impulsfolgen $Comp_{sig}$ und kann hierzu in einfacher Weise, wie nachfolgend beispielhaft im Zusammenhang mit der Figur 4 und dem zugehörigen Impulsdiagramm nach Figur 5 erläutert wird, realisiert werden. Die beispielhaft in Figur 5 gezeigte Pulsfolge $Comp_{sig}$ enthält Impulse unterschiedlicher Dauer mit unterschiedlichen Impulspausen und wird einem Trigger- und Halteglied T zugeführt, das mit dem Auftreten eines ersten Impulses eine Stromquelle Q einschaltet, die mit einem Strom I1 einen Integrationskondensator $C_{int}$ auflädt. Dabei müssen unvollständige Pulsfolgen vom Demodulator 31 als unvollständig erkannt werden und dürfen nicht zu einem Ausgangssignal führen. Hierzu dient die Haltefunktion des Trigger- und Haltegliedes T, mit der nach Ablauf einer bestimmten Zeitdauer, die frequenzabhängig gemäß $1{,}6/f_0$ gewählt werden kann, die Aufintegration mangels Impuls abgebrochen und eine Abintegration mit gleicher Geschwindigkeit gestartet wird, indem nun die Stromsenke S zur Entladung des Integrationskondensator $C_{int}$ eingeschaltet wird. Eine solche Haltefunktion ist mit dem Impulsdiagramm Hold$1{,}6/f_0$ dargestellt und zeigt, daß die Impulspause zwischen den ersten beiden Impulsen zu den Zeitpunkten $t_1$ und $t_2$ überbrückt wird, also während dieser Impulspause weiterintegriert wird, jedoch nicht vollständig diejenige im Anschluß an den zweiten Impuls, nämlich zwischen den Zeitpunkten $t_2$ und $t_3$. Daher wird nur bis zum Ablauf der Haltezeit $1{,}6/f_0$ aufintegriert, also bis zum Zeitpunkt $t_3$. Anschließend schaltet das Trigger- und Halteglied T auf die Stromsenke S zwecks Entladung des Integrationskondensator $C_{int}$ mit einem Strom $I_2$ bis zum Zeitpunkt $t_4$, an dem der nächste Impuls zur Aufintegration eintrifft, die bis zum Erreichen des maximalen Integrationswertes von 100% zum Zeitpunkt $t_5$ fortgeführt wird, obwohl noch weitere Impulse anliegen und die Haltezeit $1{,}6/f_0$ erst zum Zeitpunkt $t_6$ endet. Anschließend wird bis zum Zeitpunkt $t_7$ abintegriert, bei dem der Integrationswert des Integratorausgangssignales $Int_{out}$ seinen Ausgangswert von 0% wieder erreicht hat.

Ein beispielhafter Aufbau eines güteeinstellbaren Bandpassfilters 23 ist in Figur 6 dargestellt und kann in der Empfängerschaltung gemäß Figur 1 verwendet werden. Dieses dargestellte Bandpassfilter stellt ein gyratorisches Filter 2. Ordnung dar, dessen allgemeine Übertragungsfunktion F(s) gegeben ist durch folgende Formel:

$$F(s) = (s/\omega_0)/(1+(s/(\omega_0 Q)+(s^2/\omega_0^2))),$$

wobei s die Laplace-Transformierte, $\omega_0$ die Resonanzfrequenz und Q die Güte darstellt. Die nachstehend beschriebene Schaltung setzt diese Übertragungsfunktion um.

Gemäß Figur 6 wird über einen Eingangsanschluß E des Bandpassfilters das von dem Limitter 22 begrenzte analoge Signal dem positiven Eingang eines Summierers 231 mit drei Eingängen (2 positive Eingänge und ein negativer Eingang) zugeführt. Das aus den an den drei Eingängen anliegenden Signalen gebildete Summensignal wird mit einem Verstärker 232 um den Faktor $\omega_0$ verstärkt und an einen, eine Kapazität nachbildenden, begrenzenden Integrator 233 weitergeleitet. Anschließend wird das integrierte Signal von einem Signalformer 234, der eine Transistorkennlinie nachbildet, geformt und bildet das Ausgangssignal $B_{out}$ dieses Bandpassfilters 23. Gleichzeitig wird dieses Ausgangssignal $B_{out}$ einerseits über eine Rückkopplung, bestehend aus einem weiteren Verstärker 235 mit dem Verstärkungsfaktor $-\omega_0$ und einem diesem nachgeschalteten weiteren Integrator 236, der in seinem Aufbau dem Integrator 233 entspricht, auf den zweiten positiven Eingang des Summierers 231 geführt und andererseits über jeweils einen Verstärker 237 und 238 auf einen Umschalter 239 geführt, der in Abhängigkeit des diesem zugeführten Steuersignales $D_{tqr}$ entweder den Verstärker 237 mit einem Verstärkungsfaktor 0,1 (=$1/Q_1$) - entsprechend einem Gütewert 10 - oder den Verstärker 238 mit einem Verstärkungsfaktor 1 (=$1/Q_2$) - entsprechend einem Gütewert 1 mit dem negativen Eingang des Summierers 231 verbindet.

Durch die Herabsetzung der Güte während des High-Pegels des $D_{tqr}$-Signales - also während des Ausschaltmomentes des Treibertransistors 32 und für kurze Zeit danach - wird der Filter in einen Zustand geringerer Energieaufnahmekapazität versetzt, so daß die von dem Treibertransistor 32 verursachte Störung in Form eine Sprunges am Bandpasseingang schneller abklingen kann. Die Zeitdauer, in der das Steuersignal $D_{tqr}$ aktiv ist, muß so lange sein, wie bei den dem Bandpassfilter 23 vorgeschalteten Schaltungsteilen die Störung des Treibertransistors 32 andauert. Eine negativer Beeinflussung der Demodulation von Nutzsignalen ist hierbei ausgeschlossen, da die Zeit für Störunterdrückung wesentlich kürzer als die Pausenzeit einer Bitfolge der Nutzsignale ist.

Die für die allgemeine Funktion des Empfängers erforderlichen Eigenschaften eines solchen Bandpassfilter 23 besteht im wesentlichen darin, daß die Bandbreite des Empfängers begrenzt wird, wodurch sich eine Minimierung des Rauschens der vorlaufenden Stufen und der Photodiode und damit eine höhere Empfindlichkeit für Nutzsignale ergibt und daß schließlich auch Störsignale außerhalb der Mittenfrequenz unterdrückt werden.

### Patentansprüche

1. Verfahren zur Störunterdrückung mittels eines güteeinstellbaren Bandpassfilters (23) in einer Empfängerschaltung für trägermodulierte Empfangssignale ($S_{in}$), bei dem das bandpassgefilterte Empfangssignal ($B_{out}$) demoduliert und mit dem demodulierten Empfangssignal ($D_{out}$) ein Schaltvorgang ausgelöst wird, **dadurch gekennzeichnet, dass** eine Gütereduzierung des Bandpassfilters (23) mit dem Schaltvorgang korreliert wird.

2. Verfahren nach Anspruch 1, **dadurch gekennzeichnet, dass** die Zeitdauer der Gütereduzierung wenigstens auf die Dauer der durch den Schaltvorgang ausgelösten Störung begrenzt wird.

3. Verfahren nach Anspruch 1 oder 2, **dadurch gekennzeichnet, dass** als demoduliertes Empfangssignal ($D_{out}$) ein der Hüllkurve des

trägermodulierten Empfangssignals ($S_{in}$) entsprechender erster Rechteckimpuls zur Auslösung des Schaltvorganges erzeugt wird und daß in Abhängigkeit einer der Flanken des ersten Rechteckimpulses ($D_{out}$) ein phasenverschobener zweiter Rechteckimpuls ($D_{tqr}$) als Steuersignal (72) zur Gütereduzierung des Bandpassfilters (23) abgeleitet wird.

4. Verfahren nach Anspruch 3, **dadurch gekennzeichnet, dass** sich der zweite Rechteckimpuls ($D_{tqr}$) zeitlich an den ersten Rechteckimpuls ($D_{out}$) anschließt.

5. Verfahren nach einem der Ansprüche 3 oder 4, **dadurch gekennzeichnet, dass** mit der ersten Flanke des ersten Rechteckimpulses ($D_{out}$) der Schaltvorgang eingeleitet wird und mit der zweiten Flanke des ersten Rechteckimpulses ($D_{out}$) der Schaltvorgang beendet wird.

6. Verfahren nach einem der vorangehenden Ansprüche, **dadurch gekennzeichnet, dass** zur Demodulation das bandpassgefilterte Empfangssignal ($B_{out}$) in Form von Pulssignalen ($Comp_{sig}$) quantisiert und diese Pulsfolgen über deren Impulspausen zu einem Integralwert aufintegriert werden.

7. Verfahren nach Anspruch 6, **dadurch gekennzeichnet, dass** bei Fehlen von Pulsfolgen ($Comp_{sig}$) nach einer bestimmten Zeitdauer die Aufintegration beendet und der Integralwert zurückgeführt wird.

8. Verfahren nach einem der vorangehenden Ansprüche, **dadurch gekennzeichnet, dass** das Empfangssignal vor der Bandpassfilterung einer automatischen Verstärkungsregelung in Abhängigkeit einer durch die Signalgröße des Empfangssignales und die Umgebungsbedingungen bestimmten Regelgröße unterzogen wird.

9. Verfahren nach Anspruch 8, **dadurch gekennzeichnet, dass** die automatische Verstärkungsregelung während der Demodulation eines bandpassgefilterten Empfangssignales inaktiv geschaltet wird.

10. Verfahren nach einem der Ansprüche 5 bis 9, **dadurch gekennzeichnet, dass** zur Inaktivschaltung der automatischen Verstärkungsregelung ein gegenüber dem ersten Rechteckimpuls ($D_{out}$) phasenverschobener dritter Rechteckimpuls ($D_{stop-agc}$) erzeugt wird, dessen Pulsbreite länger ist als diejenige des ersten Rechteckimpulses ($D_{out}$).

11. Verfahren nach einem der Ansprüche 7 bis 10, **dadurch gekennzeichnet, dass** in Abhängigkeit von Integralwerten sowohl während der Aufintegration als auch während der Rückführung der erste, zweite und dritte Rechteckimpuls ($D_{out}$, tqr, $D_{stop-agc}$) erzeugt wird.

12. Schaltungsanordnung zur Durchführung des Verfahrens nach einem der vorangehenden Ansprüche, **dadurch gekennzeichnet, dass** die Empfängerschaltung einen Eingangsverstärker (1) aufweist, dem ein Regelverstärker (21) und das Bandpassfilter (23) nachgeschaltet ist, wobei das Bandpassfilter (23) als Filter 2. Ordnung gemäß folgender Übertragungsfunktion F(s) aufgebaut ist:

$$F(s) = (s/\omega_0)/(1 + (s/(\omega_0 Q) + (s^2/\omega_0^2))),$$

wobei s die Laplace-Transformierte, $\omega_0$ die Resonanzfrequenz und Q die Güte darstellt, und daß die Güte Q mittels eines Umschalters (239) auf zwei Werte $Q_1$ und $Q_2$ in Abhängigkeit des Steuersignals ($D_{tqr}$) einstellbar ist.

13. Schaltungsanordnung nach Anspruch 12, **dadurch gekennzeichnet, dass** zur Demodulation dem Bandpassfilter (23) ein Komparator (311) zur Erzeugung von Pulsfolgen ($Comp_{sig}$) nachgeschaltet ist, diese Pulsfolgen ($Comp_{sig}$) einem Analog-Integrator (313) zugeführt werden und die Integratorwerte an mehrere Schmitt-Trigger (316, 317, 318) mit unterschiedlichen Hysteresewerten weitergeleitet werden.

14. Schaltungsanordnung nach Anspruch 13, **dadurch gekennzeichnet, dass** die Ausgänge der Schmitt-Trigger (316, 317, 318) mit einem NAND-Glied (L3) zur Erzeugung des Steuersignales ($D_{tqr}$) zur Gütereduzierung des Bandpassfilters (23) verbunden sind.

15. Schaltungsanordnung nach einem der Ansprüche 12 bis 14, **dadurch gekennzeichnet, dass** zur automatischen Verstärkungsregelung mittels des Regelverstärkers (21) ein Regellogikteil (41) und ein diesem nachgeschalteten Digital-Analog-Umsetzer (42) vorgesehen ist, wobei zur Zuführung des bandpassgefilterten Empfangssignals ($B_{out}$) und des dritten Rechtecksignals ($D_{stop-agc}$) der Regellogikteil (41) mit dem Ausgang des Bandpassfilters (23) und einem der Komparatoren (317) des Demodulators (31) über jeweils eine separate Leitung (73, 75) verbunden ist.

**Claims**

1. Method of interference suppression by means of a quality-settable band-pass filter (23) in a receiver circuit for carrier-modulated received signals ($S_{in}$), in which the band-pass-filtered received signal ($B_{out}$) is demodulated and a switching process is triggered by the demodulated received signal ($D_{out}$), **characterised in that** a quality reduction of the band-pass filter (23) is correlated with the switching process.

2. Method according to claim 1, **characterised in that** the duration of the quality reduction is limited at least to the duration of the interference triggered by the switching process.

3. Method according to claim 1 or 2, **characterised in that** a first rectangular signal, which corresponds with the envelope of the carrier-modulated received signal ($S_{in}$), for triggering the switching process is generated as demodulated received signal ($D_{out}$) and that a phase-displaced second rectangular signal ($D_{tqr}$) as control signal (72) for the quality reduction in the band-pass filter (23) is derived in dependence on one of the flanks of the first rectangular signal ($D_{out}$).

4. Method according to claim 3, **characterised in that** the second rectangular signal ($D_{tqr}$) is consecutive in time to the first rectangular signal ($D_{out}$).

5. Method according to one of claims 3 and 4, **characterised in that** the switching process is initiated by the first flank of the first rectangular signal ($D_{out}$) and the switching process is concluded by the second flank of the first rectangular signal ($D_{out}$).

6. Method according to one of the preceding claims, **characterised in that** for the demodulation the band-pass-filtered received signal ($B_{out}$) is quantised in the form of pulse signals ($Comp_{sig}$) and these pulse trains are integrated up into an integral value by way of the pulse intervals thereof.

7. Method according to claim 6, **characterised in that** in the absence of pulse trains ($Comp_{sig}$) the upward integration is concluded after a defined period of time and the integral value is fed back.

8. Method according to any one of the preceding claims, **characterised in that** the received signal is subjected, prior to the band-pass filtering, to an automatic regulation of amplification in dependence on a regulating amplitude determined by the signal amplitude of the received signal and the environmental conditions.

9. Method according to claim 8, **characterised in that** the automatic regulation of amplification is switched to be inactive during demodulation of a band-pass-filtered received signal.

10. Method according to one of claims 5 to 9, **characterised in that** a third rectangular signal ($D_{stop-agc}$), which is displaced in phase relative to the first rectangular signal ($D_{out}$) and the pulse width of which is longer than that of the first rectangular signal ($D_{out}$), is generated for switching the automatic regulation of amplification to be inactive.

11. Method according to one of claims 7 to 10, **characterised in that** the first, second and third rectangular signals ($D_{out}$, $D_{tqr}$, $D_{stop-agc}$) are generated in dependence on integral values not only during the upward integration, but also during the feedback.

12. Circuit arrangement for performance of the method according to any one of the preceding claims, **characterised in that** the receiver circuit comprises an input amplifier (1), downstream of which a regulating amplifier (21) and the band-pass filter (23) are connected, wherein the band-pass filter (23) is formed as a filter of 2nd order in accordance with the following transfer function F(s):

$$F(s) = (s/\omega_0)/(1+(s/(\omega_0 Q)+(s^2/\omega_0^2)))$$

wherein s represents the Laplace transform, $\omega_0$ the resonance frequency and Q the quality, and that the quality Q is settable by means of a changeover switch (239) to two values $Q_1$ and $Q_2$ in dependence on the control signal ($D_{tqr}$).

13. Circuit arrangement according to claim 12, **characterised in that** for the demodulation a comparator (311) for generating pulse trains ($Comp_{sig}$) is connected downstream of the band-pass filter (23), these pulse trains ($Comp_{sig}$) are fed to an analog integrator (313) and the integrator values are passed on to several Schmitt triggers (316, 317, 318) with different hysteresis values.

14. Circuit arrangement according to claim 13, **characterised in that** the outputs of the Schmitt triggers (316, 317, 318) are connected with an NAND element (L3) for generating the control signal ($D_{tqr}$) for the qualify reduction of the band-pass filter (23).

15. Circuit arrangement according to one of claims 12 to 14, **characterised in that** for automatic regulation of amplification by means of the regulating amplifier (21) there is provided a regulating logic component (41) and a digital-to-analog converter (42) connected downstream thereof, wherein for the feed of the band-pass-filtered received signal ($B_{out}$) and of the third rectangular signal ($D_{stop-agc}$) the regulating logic component (41) is connected with the output of the band-pass filter (23) and with one of the comparators (317) of the demodulator (31) in each instance by way of a separate line (73, 75).

## Revendications

1. Procédé d'antiparasitage au moyen d'un filtre passe-bande (23) à qualité réglable dans un circuit récepteur pour signaux de réception ($S_{in}$) à modulation de porteuse, dans lequel le signal de réception ($B_{out}$) filtré par le filtre passe-bande est démodulé et dans lequel on déclenche une opération de commutation par le signal de réception démodulé ($D_{out}$), **caractérisé en ce qu'**une réduction de qualité du filtre passe-bande (23) est corrélée avec l'opération de commutation.

2. Procédé selon la revendication 1, **caractérisé en ce que** la durée de la réduction de qualité est limitée au moins à la durée de la perturbation causée par l'opération de commutation.

3. Procédé selon la revendication 1 ou 2, **caractérisé en ce que** pour déclencher le processus de commutation, on produit comme signal de réception démodulé ($D_{out}$) une première impulsion rectangulaire correspondant à l'enveloppe du signal de réception ($S_{in}$) à modulation de porteuse, et **en ce qu'**en fonction d'un des flancs de la première impulsion rectangulaire ($D_{out}$) on génère comme signal de commande (72) de la réduction de la qualité du filtre passe-bande (23), une deuxième impulsion rectangulaire ($D_{tqr}$) déphasée.

4. Procédé selon la revendication 3, **caractérisé en ce que** la deuxième impulsion rectangulaire ($D_{tqr}$) se raccorde temporellement à la première impulsion rectangulaire ($D_{out}$).

5. Procédé selon l'une quelconque des revendications 3 ou 4, **caractérisé en ce que** par le premier flanc de 1a première impulsion rectangulaire ($D_{out}$) on déclenche le processus de commutation et **en ce que** par le deuxième flanc de la première impulsion rectangulaire ($D_{out}$) on arrête le processus de commutation.

6. Procédé selon l'une quelconque des revendications précédentes, **caractérisé en ce que** pour démoduler, le signal de réception ($B_{out}$) filtré par le filtre passe-bande est quantifié sous forme de signal impulsionnel ($Comp_{sig}$) et **en ce que** des trains d'impulsions sont intégrés avec les pauses pour obtenir une valeur intégrale.

7. Procédé selon la revendication 6, **caractérisé en ce qu'**en l'absence de trains d'impulsions ($Comp_{sig}$) après un certain temps, l'intégration se termine et la valeur intégrale est remise à zéro.

8. Procédé selon l'une quelconque des revendications précédentes, **caractérisé en ce que** le signal de réception est soumis avant filtrage par le filtre passe-bande à une commande automatique de gain par une grandeur dont la valeur est fonction de l'amplitude du signal de réception et des conditions environnantes.

9. Procédé selon la revendication 8, **caractérisé en ce que** la commande automatique de gain est commutée à l'état inactif durant la démodulation d'un signal de réception filtré par le filtre passe-bande.

10. Procédé selon l'une quelconque des revendications 5 à 9, **caractérisé en ce que** pour la commutation à l'état inactif de la commande automatique de gain, on génère une troisième impulsion rectangulaire ($D_{stop-agc}$) déphasée par rapport à la première impulsion rectangulaire ($D_{out}$), dont la durée est supérieure à celle de la première impulsion rectangulaire ($D_{out}$).

11. Procédé selon l'une quelconque des revendications 7 à 10, **caractérisé en ce que** la première, la deuxième et la troisième impulsion rectangulaire ($D_{out}$, tqr, $D_{stop-agc}$) sont générées en fonction de valeurs intégrales aussi bien durant l'intégration que durant la remise à zéro.

12. Circuit pour la mise en oeuvre du procédé selon l'une quelconque des revendications précédentes, **caractérisé en ce que** le circuit récepteur présente un amplificateur d'entrée (1), en aval duquel sont montés un amplificateur automatique (21) et le filtre passe-bande (23), **en ce que** le filtre passe-bande est calculé en fitre de 2$^{ème}$ ordre selon la fonction de transmittance F(s) suivante :

$$F(s) = (s/\omega_0)/(1+(s/(\omega_0 Q)+(s^2/\omega_0^2))),$$

dans laquelle s représente la transformée de Laplace, $\omega_0$ la fréquence de résonance et Q la qualité, et **en ce que** la qualité Q peut être réglée au moyen d'un commutateur (239) à deux valeurs $Q_1$ et $Q_2$ en fonction du signal de commande ($D_{tqr}$).

13. Circuit selon la revendication 12, **caractérisé en ce que** pour la démodulation, un comparateur (311) est monté en aval du filtre passe-bande (23) pour la génération de trains d'impulsions ($Comp_{sig}$), **en ce que** ces trains d'impulsions ($Comp_{sig}$) sont dirigés vers un intégrateur analogique (313) et **en ce que** les valeurs d'intégration sont dirigées vers plusieurs bascules de Schmitt (316, 317,318) à valeurs d'hystérésis différentes.

14. Circuit selon la revendication 13, **caractérisé en ce**

**que** les sorties des bascules de Schmitt (316,317,318) sont reliées à un composant NAND (L3) pour la génération du signal de commande ($D_{tqr}$) de la réduction de qualité du filtre passe-bande (23).

15. Circuit selon l'une quelconque des revendications 12 à 14, **caractérisé en ce que** pour la commande automatique de gain au moyen de l'amplificateur automatique (21), on prévoit un composant logique (41) et un convertisseur numérique-analogique (42) monté en aval de celui-ci, le composant logique (41) étant relié à la sortie du filtre passe-bande (23) et l'un des comparateurs (317) du démodulateur (31) au moyen à chaque fois d'une liaison conductrice (73, 75) distincte pour la transmission du signal de réception($B_{out}$) filtré par le filtre passe-bande et du troisième signal rectangulaire ($D_{stop-agc}$).

FIG.1

FIG.2

FIG.3

FIG.4

FIG.5

FIG.6